# EUROPÄISCHE PATENTSCHRIFT

(11) **EP 4 099 114 B1**
(45) Veröffentlichungstag und Bekanntmachung des Hinweises auf die Patenterteilung: **19.07.2023**
(21) Anmeldenummer: 21176905.4
(22) Anmeldetag: 31.05.2021
(51) Int. Cl.: G05B 23/02

(54) **VERFAHREN ZUM ERKENNEN EINER EINGESCHRÄNKTEN BEDIENUNG UND BEOBACHTUNG EINER TECHNISCHEN ANLAGE, BEDIEN- UND BEOBACHTUNGSSYSTEM UND PROZESSLEITSYSTEM**
METHOD FOR DETECTING A RESTRICTED OPERATION AND OBSERVATION OF A TECHNICAL INSTALLATION, OPERATING AND MONITORING SYSTEM AND PROCESS CONTROL SYSTEM
PROCÉDÉ DE DÉTECTION D'UNE COMMANDE RESTREINTE ET D'OBSERVATION D'UNE INSTALLATION TECHNIQUE, SYSTÈME DE COMMANDE ET D'OBSERVATION ET SYSTÈME DE CONTRÔLE DE PROCESSUS

(43) Veröffentlichungstag der Anmeldung: 07.12.2022
(73) Patentinhaber: Siemens Aktiengesellschaft, 80333 München (DE)
(72) Erfinder: Lutz, Benjamin, 76327 Pfinztal (DE)
(74) Vertreter: Siemens Patent Attorneys

(56) Entgegenhaltungen:
- EP-A1- 3 104 242
- EP-A1- 3 276 437
- EP-A1- 3 480 672
- Unknown: "SIMATIC Process Control System PCS 7 V7.0 SP1. Fault-tolerant Process Control System. Configuration Manual", , 30. September 2007 (2007-09-30), Seiten 1-226, XP055302344, Gefunden im Internet: URL:https://cache.industry.siemens.com/dl/ files/533/27002533/att_26853/v1/ps7red_b_e n-US.pdf [gefunden am 2016-09-14]

## Beschreibung

Die Erfindung betrifft ein Verfahren zum Bedienen und Beobachten einer zu steuernden technischen Anlage gemäß dem Oberbegriff des Anspruchs 1. Die Erfindung betrifft ferner ein Bedien- und Beobachtungssystem gemäß dem Oberbegriff des Anspruchs 8 zur Durchführung des Verfahrens und ein entsprechend geeignetes Prozessleitsystem.

Für die Bedienung und Beobachtung technischer Anlagen, in welchen ein verfahrenstechnischer Prozess oder ein Produktionsprozess abläuft, werden Anlagenbilder verwendet, welche die Zusammenhänge - insbesondere zwischen den einzelnen funktionalen Einheiten oder Komponenten der technischen Anlage - abstrahiert darstellen. Die Anlagenbilder werden zumeist auf einem Client eines Prozessleitsystems dargestellt. Anlagenbilder setzen sich aus verschiedenen Bedien- und Anzeigeelementen zusammen. Dazu gehören: statische Symbole (z.B. Leitungen, Rechtecke, usw.), dynamisierte Symbole (z.B. in Abhängigkeit von Prozesswerten Leitungen mit Farbumschlag, Rechtecke mit Füllständen, usw.), Block-Symbole (zur dynamisierten Visualisierung verfahrenstechnischer Prozessobjekte), komplexe Kontrollanzeigen (z.B. Trendanzeigen, Meldefolgeanzeigen, usw.) und so genannte Container, welche abgeschlossene Bildeinheiten darstellen, um Inhalte aus unabhängigen und eigenständigen Quellen visualisieren zu können (z.B. Webcams, Anlagenbilder modularer Anlagenteile, so genannter Package Units) oder auch so genannte Apps, also eigenständige Applikationen, wie z.B. Regler-Optimierer oder KPI Berechnungen. Anlagenbilder werden im Engineering projektiert, d.h. Symbole, Dynamisierungen, komplexe Kontrollanzeigen, usw. werden positioniert und deren Eigenschaften festgelegt.

Die in den Anlagenbildern dargestellten Block Symbole werden durch Prozesswerte von so genannten Prozessobjekten (POi, vgl. Figur) gespeist oder dynamisiert, die in einem Prozessabbild (PI, vgl. Figur) eines Operator Station Servers (OS_S, vgl. Figur) des Prozessleitsystems lokalisiert sind. Ein Prozessobjekt entspricht einer funktionalen Komponente oder Einheit einer verfahrenstechnischen Anlage oder Produktionsanlage und ist stets mit einer Messstelle verbunden. Zu den Prozessobjekten gehören alle bedien- und beobachtbaren Bausteine eines CFS-Plans (CFC = Continuous Function Charts) einer technischen Anlage wie beispielsweise ein Motor oder Ventil, Objekte zur Automatisierung wie z.B. Füllstandsregelungen oder Motorsteuerungen oder Objekte zur Signalerfassung und Signalverarbeitung. Das computerimplementierte, im Prozessabbild lokalisierte Prozessobjekt ist somit stets einem technischen Objekt der technischen Anlage zugeordnet steht mit diesem in Wirkverbindung. Der Begriff "dynamisiert" wird hier stellvertretend für eine zeitliche Änderung der Prozesswerte verwendet. Diese Änderung kann entweder durch den Prozess selbst (Temperaturmesswert eines Behälters ändert sich.) oder durch den Operator (Eingabe: "Erhitze den Behälter auf eine Temperatur von 100°C.") hervorgerufen. Als Folge jeder Änderung muss das Anlagenbild aktualisiert und neu gezeichnet werden.

Dabei können die Prozessobjekte in den Prozessabbildern unterschiedlicher OS Server verteilt sein. Die bedeutet, dass die Block Symbole der Anlagenbilder auch durch Prozesswerte von Prozessobjekten dynamisiert werden, die im Prozessabbild anderer Operator Station Server lokalisiert sind, als jener auf dem sich das Anlagenbild selbst befindet. Entfällt ein Operator Station Server beispielsweise aufgrund eines Defekts, einer Wartung oder durch Laden von Projektierungsdaten und beinhaltet dieser Operator Station Server Prozesswerte von Prozessobjekten zur Dynamisierung eines Anlagenbildes eines anderen Operator Station Servers, so ist die Bedienung und Beobachtung dieses Anlagenbildes teilweise für den Zeitraum des Ausfalls eingeschränkt. Zwar weisen entsprechende Diagnoseinformationen in Meldefolgeanzeigen auf den Ausfall von Operator Station Servern hin, jedoch ist für einen Operatoren nicht ersichtlich, welche Auswirkungen dies auf seine Bedienung und Beobachtung im Kontext der für ihn zugänglichen Anlagenbilder und Prozessobjekte hat. Auch aus entsprechenden Navigationshierarchien entfallen die Anlagenbilder, die sich auf den ausgefallenen Operator Station Servern befinden. Die Anlagenbilder der verfügbaren Operator Station Server bleiben erhalten, sind aber eingeschränkt bedienbar, da sie zur Dynamisierung Prozesswerte von Prozessobjekten nutzen, die in dem Prozessabbild eines entfallenen Operator Station Server enthalten sind. Für den Operatoren ist es nicht ersichtlich, welche seiner verfügbaren Anlagenbilder nach dem Wegfall eines Operator Station Servers betroffen sind und bei welchen die Bedienung und Beobachtung eingeschränkt ist. Besonders problematisch ist es, wenn die eingeschränkte Bedien- und Beobachtbarkeit eines Anlagenbildes durch einen Operator erst dann erkannt wird, wenn er es öffnet, um eine notwendige Bedienung und Beobachtung vorzunehmen.

Das Dokument EP 3 276 437 A1 offenbart ein Verfahren und System nach dem Oberbegriff der Ansprüche 1 und 8, wobei jeder OS Server eine "Service-Configuration"-Tabelle hält, die für jede Teilanlage folgende Informationen speichert: den Server Name / IP Adresse des OS Servers, der das Prozessabbild der jeweiligen Teilanlage hält und pflegt, wie viele Prozessobjekte im Prozessabbild der jeweiligen Teilanlage enthalten sind, Health Index für den Zustand der übrigen OS Server in Bezug auf Speicherauslastung, CPU Auslastung, Temperatur der Komponenten und Aspekte der Hardware und Software sowie der Modus des jeweilige OS Servers (aktiv/passiv). Die Einträge in dieser "Service-Configuration"-Tabelle werden bei der Auswahl von Vorzugsservern mitberücksichtigt, um die gesamte Querkommunikation zwischen den OS Servern zu minimieren.

Der Erfindung liegt daher die Aufgabe zugrunde, ein Verfahren anzugeben, mittels dessen ein effizientes und vor allem zuverlässiges Bedienen und Beobachten einer zu steuernden technischen Anlage erreicht wird, was eine sichere Prozessführung erlaubt. Des Weiteren soll ein zur Durchführung des Verfahrens besonders geeignetes Bedien- und Beobachtungssystem für ein Prozessleitsystem und ein entsprechendes Prozessleitsystem angegeben werden.

Diese Aufgabe wird durch ein Verfahren mit den Merkmalen des Anspruchs 1 gelöst. Außerdem wird die Aufgabe durch ein Bedien- und Beobachtungssystem gemäß Anspruch 8 und einem Prozessleitsystem gemäß Anspruch 10 gelöst. Vorteilhafte Weiterbildungen ergeben sich aus den abhängigen Ansprüchen.

Erfindungsgemäß wird ein Verfahren vorgestellt, anhand dessen eine Erkennung einer teilweise eingeschränkten Bedienung und Beobachtung einer technischen Anlage, in der ein technischer Prozess mittels eines Prozessleitsystems gesteuert wird, ermöglicht wird. Das Prozessleitsystem weist mindestens zwei Operator Station Server und mindestens einen Operator Station Client auf, wobei mit dem Prozess verbundene Prozessobjekte in Prozessabbildern unterschiedlicher Operator Station Server des Prozessleitsystems verteilt sind. Zur Prozessbeobachtung ist auf dem Operator Station Client eine grafische Benutzeroberfläche zur Anzeige von Anlagenbildern mit zu den Prozessobjekten gehörigen Symbolen vorgesehen.

Die Erfindung ist durch folgende Verfahrensschritte gekennzeichnet: Mittels einer Komponente eines ersten Operator Station Servers wird ermittelt, ob ein anderer Operator Station Server des Prozessleitsystems ausgefallen ist. Ein Ausfall dieses Servers wird einer Alarm-Management-Komponente des ersten Operator Station Servers gemeldet. Die Alarm-Management-Komponente überprüft, ob auf dem ersten Operator Station Server Anlagenbilder abgelegt sind, die Prozessobjekte aus dem Prozessabbild des ausgefallenen Servers enthalten und welche Anlagenbilder vom Serverausfall betroffen sind. In diesem Fall wird ein Bedienalarm, der über die eingeschränkte Bedienung des betroffenen Anlagenbilds informiert, ausgelöst. Mittels einer Komponente, welche einen Alarmstatus von Anlagenbildern verwaltet, wird im Prozessabbild des ersten Servers ein eigenes Tag, welches den Alarmstatus des betroffenen Anlagenbilds kennzeichnet, aktualisiert und auf der grafischen Benutzeroberfläche des Operator Station Clients wird der Bedienalarm in Verbindung mit dem betroffenen Anlagenbild angezeigt.

Der Vorteil der Erfindung besteht darin, dass beim Wegfall von Prozessobjekten aufgrund eines Server-Ausfalls des Leitsystems die davon betroffenen Anlagenbilder, die folglich nur teilweise bedien- und beobachtbar sind, mittels des erfindungsgemäßen Verfahrens individuell ermittelt und auch individuell gekennzeichnet werden. Ein Operator kann auf diese Weise während der Prozessführung unmittelbar erkennen, welche seiner zur Verfügung stehenden Anlagenbilder zum gegenwärtigen Zeitpunkt nur teilweise bedien- und beobachtbar sind, ohne diese explizit anwählen zu müssen. Durch das Auslösen des Bedienalarms ist der Operator des Leitsystems informiert und alarmiert, wodurch das Bedienen und Beobachten der Anlage zuverlässig bleibt, und auch die technische Anlage verbleibt in einem sicheren Zustand, obwohl durch den Serverausfall eine potenziell gefährliche Situation entstehen könnte.

In einer vorteilhaften Ausführung der Erfindung wird zur Anzeige des Bedienalarms auf der grafischen Benutzeroberfläche des Clients das aktualisierte Tag beim Visualisierungsdienst über eine Tag-Schnittstelle angemeldet, und mittels der Komponente Display-Hierarchie wird der Bedienalarm in allen Anzeigen als Alarm eigener Klasse berücksichtigt. Auf diese Weise können Operatoren an mehreren Stellen in einem Operator Station Client über nur teilweise bedien- und beobachtbare Anlagenbilder informiert werden - noch bevor diese geöffnet werden. Da die Meldung durch das aktualisierte DAS-Tag ausgelöst wird, ist die Darstellung immer aktuell. Dies erlaubt ein besonders sicheres Bedienen- und Beobachten der technischen Anlage.

In einer besonders vorteilhaften Ausführung der Erfindung ist der Bedienalarm konfigurierbar. Der Alarm zur Meldung einer eingeschränkten Bedienung und Beobachtung wird als Typ durch das Engineering im Prozessabbild angelegt. Dabei werden auch die Alarm-Attribute festgelegt, wie z.B. betroffene Prozessobjekte in betroffenen Anlagenbildern. Die Alarm-Attribute können dabei beliebig festgelegt werden. Dies erlaubt eine hohe Flexibilität bei der Bereitstellung des Alarms.

In weiteren vorteilhaften Ausführungen der Erfindung wird der Bedienalarm in einer separaten Anzeige angezeigt oder die Anzeige des Bedienalarms erfolgt zusammen mit Prozessalarmen in Gruppenalarmanzeigen oder Meldefolgenanzeigen. Dies erlaubt eine bessere Sichtbarkeit des Bedienalarms. Ein Operator kann die Einschränkung der Bedienung besser erkennen.

Gemäß weiteren vorteilhaften Ausführungsvarianten erfolgt die Aktualisierung des Tags des Alarmstatus des betroffenen Anlagenbilds im Prozessabbild zur Laufzeit des Leitsystems in Echtzeit oder mit jedem Takt oder ereignisgesteuert. Dies erlaubt eine dynamische und adaptive Einstellung der Bedienung der technischen Anlage. Während des Engineerings kann festgelegt werden, wie der Bedienalarm konfiguriert werden soll.

In einer weiteren vorteilhaften Ausführung des Verfahrens wird der jeweilige Zustand des Display Alarm Status (DAS) Tags zeitabhängig gespeichert. Auf diese Weise können vorteilhaft Zeiträume ermittelt werden, in denen eine eingeschränkte Bedienbarkeit vorliegt. Damit kann die eingeschränkte Bedienung und Beobachtung auch historisch nachverfolgt werden. In diesem Kontext können zusätzlich die Prozessobjekte, die eine eingeschränkte Bedienbarkeit hervorgerufen haben, gespeichert werden, und/oder Statistiken über die Prozessobjekte, Prozessabbilder und Server, die eine eingeschränkte Bedienbarkeit hervorgerufen haben, erstellt werden. Solch umfangreiche Kontextinformationen können beispielsweise in ein Werkzeug zur Qualitätssicherung eingelesen werden und dienen der Kontrolle und Aufzeichnung von Änderungen, die in Prozessen vorgekommen sind. Somit sind Eingriffe in die Bedienung der technischen Anlage nach Auftreten eines Bedienalarms im Nachhinein nachvollziehbar.

Das erfindungsgemäße Verfahren wird bevorzugt in Software oder in einer Kombination aus Soft-/Hardware implementiert, so dass die Erfindung auch ein Bedien- und Beobachtungssystem und ein Prozessleitsystem betrifft, welche dazu ausgebildet sind, ein Verfahren der beschriebenen Art durchzuführen.

Im Folgenden wird die Erfindung sowie deren Ausgestaltungen anhand einer Figur, in der ein Ausführungsbeispiel der Erfindung dargestellt ist, näher beschrieben und erläutert.

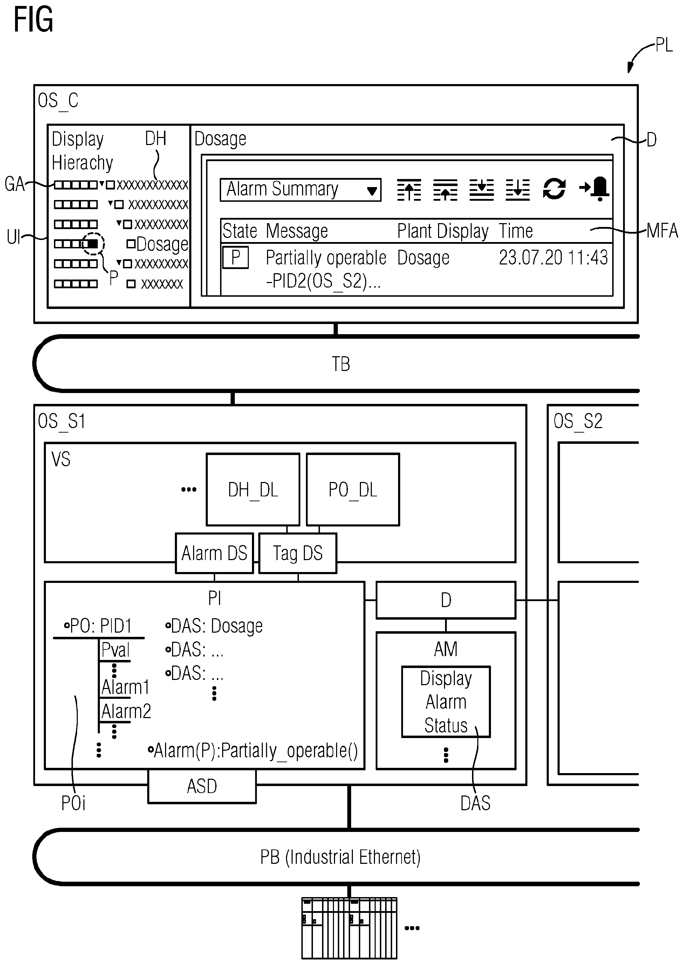

Die einzige Figur zeigt
ein Funktionsschema eines Prozessleitsystems zur Steuerung eines Prozesses mit einem Operator Station Client und mit einem Operator Station Server mit angedeuteter Softwarearchitektur zur Implementierung des erfindungsgemäßen Verfahrens.

In der Figur ist ein Funktionsschema von Teilen eines Prozessleitsystems PL zur Steuerung eines verfahrenstechnischen Prozesses oder eines Produktionsprozesses in einer technischen Anlage dargestellt. Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Außerdem kann es sich um eine Anlage zur Produktion von Waren handeln, wie einer Fabrik mit Fertigungsstraßen.

Diese Anlagen verfügen jeweils über ein Prozessleitsystem oder zumindest ein computerunterstütztes Modul zur Steuerung und Regelung des ablaufenden Prozesses oder der Produktion. Das Prozessleitsystem umfasst gewöhnlich Sensoren zur Ermittlung von Messwerten sowie verschiedene Aktoren (hier nicht dargestellt). Zudem umfasst das Leitsystem sogenannte prozess- oder fertigungsnahe Komponenten wie Automatisierungsgeräte, die zur Ansteuerung der Aktoren bzw. Sensoren dienen. Darüber hinaus weist das Leitsystem u.a. Mittel zum Bedienen und Beobachten sowie Mittel zur Visualisierung der technischen Anlage und Mittel zum Engineering auf. Unter dem Begriff Leitsystem sind zusätzlich auch weitere Recheneinheiten für komplexere Regelungen und Systeme zur Datenspeicherung und Datenverarbeitung eingeschlossen.

In der Figur ist nur ein Teil eines Prozessleitsystems dargestellt, das im Wesentlichen ein Bedien- und Beobachtungssystem mit seinen Bestandteilen umfasst, was im vorliegenden Ausführungsbeispiel einen Operator Station Client OS_C (im Folgenden als OS Client abgekürzt), zwei Operator Station Server OS_S1 und OS_S2 (im Folgenden als OS Server abgekürzt) entspricht. Das Prozessleitsystem PL kann selbstverständlich eine Vielzahl von OS Clients, OS Servern und Automatisierungsgeräten AS, Feldgeräten (nicht dargestellt) etc. aufweisen. Die Automatisierungsgeräte sind einerseits über einen Anlagenbus PB, der in der Regel als Industrial Ethernet-Bus ausgebildet ist, mit den OS Servern und andererseits über mindestens einen weiteren hier nicht dargestellten Bus mit dezentralen Peripherien verbunden, an welche eine Vielzahl von Feldgeräten (Sensoren, Aktuatoren) angeschlossen sind.

Zur Bedienung und Beobachtung tauscht der OS Client OS_C über ein weiteres Bussystem TB, welches hier als Terminalbus bezeichnet wird, Informationen und Daten mit den OS-Servern OS_S1 und OS_S2 aus. Häufig ist das Prozessleitsystem derart ausgebildet, dass es mindestens eine weitere Komponente wie beispielsweise eine Engineering Workstation (hier nicht dargestellt) besitzt. Bei dieser handelt es sich um einen Rechner oder Server, der zur Datenübertragung an mindestens eines der Kommunikationssysteme TB und PB angeschlossen ist, und auf den ebenso über einen Client des Bedien- und Beobachtungssystems, welches mindestens einen OS Server und mindestens einen OS Client umfasst, zugegriffen werden kann. Bei Bedarf können noch weitere Rechner oder Server mit den Kommunikationssystemen TB und PB verbunden werden.

In der Figur sind neben Teilen der soeben beschriebenen Hardware-Konfiguration des Prozessleitsystems auch Teile der Software-Architektur zur Implementierung des erfindungsgemäßen Verfahrens in vereinfachter Form dargestellt. So sind im OS Server eine Vielzahl von Funktionen zur Erzeugung von Anlagenbildern und sonstigen Anzeigen (engl. Display) als Software-Bausteine oder Software-Komponenten (hier in Form von Rechtecken, abgekürzt SW-Komponenten) dargestellt. Auf dem OS Client hingegen sind verschiedene Anzeigen einer grafischen Benutzeroberfläche UI des Prozessleitsystems PL dargestellt.

Auf der linken Anzeige der grafischen Benutzeroberfläche ist eine so genannte Bildhierarchie DH neben einer Gruppenalarmanzeige GA dargestellt. Die Bildhierarchie DH wird von einem Anwender mittels einer geeigneten Software eines hier nicht dargestellten Engineering-Systems des Prozessleitsystems während der Engineering-Phase erstellt und repräsentiert eine technologische Sicht der zu steuernden Anlage. Darin sind strukturiert Knoten eingetragen bzw. hinterlegt, die mit Anlagenbildern, z.B. "Dosage", verknüpft sind.

Die jeweiligen Anlagenbilder können online, d.h. während der Prozesssteuerung - geöffnet werden, indem zur Prozessbeobachtung ein Operator jeweils den entsprechenden Anlagenbild-Knoten der Bildhierarchie selektiert bzw. mittels einer "Maus" anklickt, wodurch das dem selektierten Anlagen-Knoten zugehörige Anlagenbild geöffnet und auf dem OS Client dargestellt wird. Ein Anlagenbild kann beispielsweise ein grafisches Bildsymbol wie einen Tank oder eine Pumpe umfassen und ein zu einem Prozessobjekt gehöriges Block-Symbol, wobei das Block-Symbol zur Prozessbeobachtung vorgesehen ist und aktuelle Prozesswerte, Parameter und Alarmkennzeichnungen dieses Prozessobjektes während der Prozesssteuerung anzeigt.

Wie bereits erwähnt, können die Block-Symbole in Anlagenbildern durch Prozesswerte von Prozessobjekten dynamisiert werden, die im Prozessabbild anderer OS Server lokalisiert sind, als jener auf dem sich das Anlagenbild selbst befindet.

Fällt nun ein solcher OS Server aus oder ist nicht verfügbar, so stellt das erfindungsgemäße Verfahren dennoch eine zuverlässige Anlagenbedienung sicher.

In dem folgenden Ausführungsbeispiel wird in einem ersten Schritt mittels der Komponente D des OS Servers OS_S1 ermittelt, ob ein anderer OS Server des Prozessleitsystems PL ausgefallen ist. Die Komponente D kommuniziert mit allen anderen OS Servern und verteilt jegliche Informationen eines ersten OS Servers auf allen OS Server des Prozessleitsystems und erhält auf Anfrage (Query) auch entsprechende Informationen zurück. Die Komponente D kann somit auch die Verteilung der Prozessobjekte auf anderen OS Servern feststellen. Benötigt ein im Prozessabbild PI von OS_S1 abgelegtes Anlagenbild ein Prozessobjekt aus einem Prozessabbild eines anderen OS Servers, so fragt es über die Komponente D nach dem benötigten Prozessobjekt an. Die Komponente D wiederum sorgt dafür, dass das Prozessabbild PI des ersten OS Servers auf das Prozessobjekt PO des anderen OS Servers zugreifen kann.

Bei dem Prozessabbild PI eines OS Servers handelt es sich um eine Art Datenbank, in der alle Daten wie Prozesswerte oder Alarme der Prozessobjekte verwaltet werden, welche zu einer Laufzeit der technischen Anlage empfangen werden. Die computerimplementierten Prozessobjekte sind jeweils einem technischen Objekt der technischen Anlage zugeordnet und stehen mit diesen entsprechend in einer Wirkverbindung. Das Prozessobjekt POi in der Figur ist mit der Bezeichnung "PO:PID1" versehen und weist eine Anzahl an zugeordneten Parametern auf, die in der Figur mit "Pval", "Alarm 1", "Alarm 2" usw. bezeichnet werden.

Die Alarme der Prozessobjekte stehen weiterhin in Wirkverbindung mit der in der Figur dargestellten Software-Komponente der Alarm-Managers AM, die in dem gezeigten Ausführungsbeispiel einerseits mit dem Prozessabbild PI und andererseits mit der Verteilungs-Komponente D verbunden ist. Der Alarm-Manager oder die Alarm-Management-Komponente AM fragt entweder zeitabhängig oder ereignisgesteuert bei dem Prozessabbild PI an, um zu ermitteln, ob sich ein Alarm-Status eines Prozessobjektes, welches dem eigenen Server, hier dem OS Server OS_S1, zugeordnet ist, verändert hat. Der Alarm Manager AM meldet sich ferner bei der Verteilungs-Komponente D an, um auch die Alarme von Prozessobjekten anderer OS Server berücksichtigen zu können. Schlägt eine Anmeldung fehl (OS Server nicht verfügbar), oder wird eine laufende Anmeldung abgelehnt (OS Serverentfallen), so kann auch falls das Anlagenbild geöffnet wird, keine Bedienung und Beobachtung für die betroffenen Prozessobjekte erfolgen.

Ein Ausfall eines anderen Servers wird auf diese Weise der Alarm-Management-Komponente des ersten der OS Servers gemeldet.

In einem nächsten Schritt überprüft die Alarm-Management-Komponente AM, ob auf dem ersten OS Server OS_S1 Anlagenbilder abgelegt sind, die Prozessobjekte aus dem Prozessabbild des ausgefallenen Servers (OS_S2) enthalten und welche Anlagenbilder vom Server-Ausfall betroffen sind.

Dies erfolgt anhand eines so genannten Display-Alarm Status-Tag (auch als DAS-Tag bezeichnet). Bei dem in dieser Erfindung verwendeten Tag (engl. Etikett) handelt es sich um eine komplexe Datenstruktur, welche erlaubt, zusätzliche Eigenschaften oder Attribute einem Daten-Element zuzuordnen, um einen bestimmten Zweck zu erfüllen. Im Falle der Erfindung ist für jedes Anlagenbild im Prozessabbild eines OS Servers ein Display-Alarm-Status-Tag (DAS-Tag) angelegt, welches den Alarm-Status des jeweiligen Anlagenbildes repräsentiert. Tritt ein Alarm eines Prozessobjekts auf (oder ändert seinen Zustand), so ordnet die Software-Subkomponente Display Alarm Status DAS der Alarm-Management-Komponente AM diesen Status einem definierten Anlagenbild zu - dem Anlagenbild, in dem sich das Block-Symbol des alarmgebenden Prozessobjekts befindet. Die Software-Subkomponente Display Alarm Status DAS sorgt demnach dafür, dass alle Alarme der in dem vom Server-ausfall betroffenen Anlagenbild vorhandenen Prozessobjekte empfangen werden und lediglich der Alarm mit höchster Priorität oder derjenige, der einen aktuellen Zeitstempel aufweist und nicht quittiert ist, wird in ein zum Anlagenbild konfigurierten Display Alarm Status (DAS) Tag geschrieben (z.B. DAS: Dosage in FIG für Anlagenbild "Dosage"). Erfindungsgemäß wird für jedes Anlagenbild nach einer definierten Adressierungskonvention ein solches DAS Tag angelegt. Das Display Alarm Status (DAS) Tag wird demnach um eine Status-Information erweitert und mit den Anlagenbildern gekoppelt. Bei der Status-Information handelt es sich um den Alarmstatus für eine eingeschränkte Bedienung und Beobachtung beim Wegfall von verteilen Prozessobjekten.

In diesem Fall, wenn klar ist für welches Anlagenbild Prozessobjekte von anderen Servern fehlen, wird durch die Alarm-Management-Komponente ein Bedienalarm P, der über die eingeschränkte Bedienung des betroffenen Anlagenbilds informiert, ausgelöst. Bei dem Bedienalarm handelt es sich um einen Alarm einer neuen, hierfür eingeführten Alarmklasse P: "partially operable Plant Display" oder "eingeschränkte Bedienung". Dieser Alarm ist konfigurierbar und kann mit bestimmten Eigenschaften versehen werden (z.B. rosa blinkend). Der Alarm zur Meldung einer eingeschränkten Bedienung und Beobachtung wird als Typ automatisch durch das Engineering im Prozessabbild angelegt. Zur Laufzeit kann die Alarm-Management-Komponente dann Instanzen davon anlegen - den Alarm also aktiv auslösen - für jedes Problem, das ermittelt wurde. Beim Anlegen einer Alarm Instanz füllt die Alarm-Management-Komponente die vorkonfigurierten Alarmattribute aus - wie z.B. betroffene Prozessobjekte in betroffenen Anlagenbildern.

Zusätzlich wird mittels der Software-Subkomponente Display Alarm Status DAS, welche den Alarmstatus von Anlagenbildern verwaltet, im Prozessabbild des ersten OS Servers das DAS Tag, welches den Alarmstatus des betroffenen Anlagenbilds kennzeichnet, aktualisiert. Wird von der Software-Subkomponente Display Alarm Status DAS ein neuer Alarm für ein Prozessobjekt des Anlagenbildes empfangen, wird dieser mit dem bereits vorhandenen DAS-Tag verglichen. Nur wenn der neue Alarm von höchster Priorität ist oder einen aktuellen Zeitstempel aufweist und nicht quittiert ist, wird das DAS-Tag überschrieben. Auf diese Weise wird die Datenstruktur des DAS-Tags in seinem Status stets aktuell gehalten, damit der Operator im Prinzip instantan über die eingeschränkte Bedienbarkeit informiert ist. Die Software-Subkomponente Display Alarm Status DAS dient hierbei sozusagen als Tag-Manager, der stets überprüft, welcher Display Alarm Status vorliegt.

In Verbindung mit dem betroffenen Anlagenbild wird auf der grafischen Benutzeroberfläche UI des OS Clients OS_C der Bedienalarm P angezeigt und die Anlagenbilder werden gekennzeichnet, für die nicht alle Prozessobjekte verfügbar sind. Der ausgelöste Alarm der neuen Alarmklasse P wird genutzt, um beispielsweise in einer Gruppenalarmanzeige (GA in der Display Hierarchy von OS_C) darstellen zu können, dass für ein bestimmtes Anlagenbild die Bedienung eingeschränkt ist. Da wie beschrieben die Display Alarm Status DAS-Tags um den Alarmstatus für eine eingeschränkte Bedienung und Beobachtung beim Wegfall von verteilen Prozessobjekten erweitert worden ist, kann nun auch wie dargestellt ein entsprechender Status ausgegeben werden (P mit rosarotem Hintergrund), falls das betroffene Anlagenbild in der Anlagenbildhierarchie nur teilweise bedien- und beobachtbar ist. Neben der Darstellung in der Anlagenbildhierarchie (Display Hierarchy) kann darüber hinaus auch eine tabellarische Ausgabe in einer Meldefolgeanzeige (MFA im Anlagenbild Dosage von OS_C) erfolgen und dieser entnommen werden, dass es Anlagenbilder gibt, die zwar verfügbar sind, jedoch nur bedingt bedient und beobachtet werden können, wobei in dieser Darstellung auch ein erweiterter Kontext einsehbar ist.

In dem OS Server OS_S1 ist ein Visualisierungsdienst VS integriert, über den eine Übertragung von (Visualisierungs-)Daten an den OS Client OS_C erfolgt. Der Visualisierungsdienst ist über die Schnittstellen "Alarm DS" und "Tag DS" mit den Datenquellen (engl. Data Sources) innerhalb des Prozessabbilds PI verbunden. Der Visualisierungsdienst verfügt damit über alle Informationen, die über die Komponenten des Prozessabbilds bekannt sind, um diese an einen angeschlossenen OS Client zur grafischen Darbietung übertragen zu können.

Die im Visualisierungsdienst VS enthaltene Anlagenbildhierarchie (Display Hierarchy DH_DL) ist für die Darstellung der Bildhierarchie (Display Hierarchy) auf dem OS Client mit sämtlichen Alarmzuständen und Logiken zuständig. Der Visualisierungsdienst VS umfasst ferner die Komponente PO_DL, welche für die Darstellung der Prozessobjekte POi verantwortlich ist. Im Anlagenbild werden zu den Prozessobjekten gehörige Block-Symbole dargestellt (nicht in der Figur enthalten), wobei die Block-Symbole zur Prozessbeobachtung vorgesehen sind, um aktuelle Prozesswerte und Parameter während der Prozesssteuerung anzuzeigen.

Die Idee dieser Erfindung ist es weiterhin, dass die Verfügbarkeit von verteilten Prozessobjekten bei der Berechnung des Display Alarm Status DAS mitberücksichtigt werden soll. Immer dann, wenn eine Alarmanmeldung eines verteilten Prozessobjekts
- nicht erfolgen kann (z.B. weil ein benachbarter OS Server nicht verfügbar ist)
- beendet wird (z.B. weil ein benachbarter OS Server nicht mehr verfügbar ist)
wird dies im Display Alarm Status DAS vermerkt und durch die Eigenschaften einer hierfür eingeführten Alarmklasse (P - partially operable Plant Display) entsprechend codiert (z.B. rosa blinkend).

Weiterhin wird auch ein durch diese Erfindung eingeführter Alarm der Alarmklasse P gemeldet. Ein Alarm der Alarmklasse P stellt noch weiteren Kontext zur teilweise eingeschränkten Bedien- und Beobachtbarkeit zur Verfügung, als es für die Display Alarm Status Tags vorgesehen ist, wie z.B.
- die Zeiträume, in denen eine eingeschränkte Bedien- und Beobachtbarkeit vorliegt oder vorgelegen hat.
- die Prozessobjekte, die eine eingeschränkte Bedien- und Beobachtbarkeit hervorgerufen haben.
- die OS Server, die die Prozessobjekte im Prozessabbild haben, die die eine eingeschränkte Bedien- und Beobachtbarkeit hervorgerufen haben.

Somit können beim Wegfall verteilter Prozessobjekte die davon betroffenen Anlagenbilder, die folglich nur teilweise bedien- und beobachtbar sind, individuell ermittelt und auch individuell gekennzeichnet werden, so dass für Operatoren an mehreren Stellen in einem OS Client Hinweise eingebracht werden können. Durch Speicherung und entsprechende Archivierung der Display Alarm Status Tags und des neu eingeführten Alarms, lässt sich die eingeschränkte Bedienung und Beobachtung auch historisch nachverfolgen, was für nachträgliche Untersuchungen von Gefahrensituationen von großer Wichtigkeit ist.

## Patentansprüche

1. Verfahren zum Erkennen einer eingeschränkten Bedienung und Beobachtung einer technischen Anlage, in der ein Prozess mittels eines Prozessleitsystems (PL) gesteuert wird, wobei das Prozessleitsystem mindestens zwei Operator Station Server (OS_S1, OS_S2) und mindestens einen Operator Station Client (OS_C) aufweist, und mit dem Prozess verbundene Prozessobjekte (POi) auf Prozessabbilder (PI) unterschiedlicher Operator Station Server (OS_S1, OS_S2) des Prozessleitsystems (PL) verteilt sind, und zur Prozessbeobachtung eine grafische Benutzeroberfläche (UI) auf dem Operator Station Client (OS_C) zur Anzeige von Anlagenbildern mit zu den Prozessobjekten (POi) gehörigen Symbolen vorgesehen ist
**dadurch gekennzeichnet,**
- **dass** mittels einer Komponente (D) eines ersten Operator Station Servers (OS_S1) ermittelt wird, ob ein anderer Operator Station Server (OS_S2) des Prozessleitsystems (PL) ausgefallen ist,
- **dass** ein Ausfall dieses Servers (OS_S2) einer Alarm-Management-Komponente (AM) mindestens des ersten der Operator Station Servers (OS_S1) gemeldet wird,
- **dass** die Alarm-Management-Komponente (AM) überprüft, ob auf dem ersten Operator Station Server (OS_S1) Anlagenbilder abgelegt sind, die Prozessobjekte aus dem Prozessabbild des ausgefallenen Servers (OS_S2) enthalten und welche Anlagenbilder vom Server-Ausfall betroffen sind,
- **dass** in diesem Fall ein Bedienalarm (P), der über die eingeschränkte Bedienung des betroffenen Anlagenbilds informiert, ausgelöst wird,
- **dass** mittels einer Komponente (DAS), welche einen Alarmstatus von Anlagenbildern verwaltet, im Prozessabbild (PI) des ersten Operator Station Servers (OS_S1) ein Tag, welches einen Alarmstatus des betroffenen Anlagenbilds kennzeichnet, aktualisiert wird, und
- **dass** in Verbindung mit dem betroffenen Anlagenbild auf der grafischen Benutzeroberfläche (UI) des Operator Station Clients (OS_C) der Bedienalarm (P) angezeigt wird.

2. Verfahren nach Anspruch 1,
**dadurch gekennzeichnet, dass** zur Anzeige des Bedienalarms (P) auf der grafischen Benutzeroberfläche des Clients das aktualisierte Tag beim Visualisierungsdienst (VS) über eine Tag-Schnittstelle (Tag_DS) angemeldet wird, und mittels der Komponente Display-Hierarchie (DH_DL) der Bedienalarm (P) in allen Anzeigen als Alarm eigener Klasse berücksichtigt wird.

3. Verfahren nach Anspruch 1 oder 2,
**dadurch gekennzeichnet, dass** der Bedienalarm konfigurierbar ist.

4. Verfahren nach Anspruch 1 oder 2,
**dadurch gekennzeichnet, dass** der Bedienalarm in einer separaten Anzeige angezeigt wird oder die Anzeige des Bedienalarms zusammen mit Prozessalarmen in Gruppenalarmanzeigen oder Meldefolgenanzeigen erfolgt.

5. Verfahren nach einem der vorhergehenden Ansprüche,
**dadurch gekennzeichnet, dass** die Aktualisierung des Tags des Alarmstatus des betroffenen Anlagenbilds im Prozessabbild zur Laufzeit des Leitsystems in Echtzeit oder mit jedem Takt oder ereignisgesteuert erfolgt.

6. Verfahren nach einem der vorhergehenden Ansprüche,
**dadurch gekennzeichnet, dass** ein Zustand des Tags zeitabhängig gespeichert wird, um Zeiträume zu ermitteln, in denen eine eingeschränkte Bedienbarkeit vorliegt.

7. Verfahren nach Anspruch 6,
**dadurch gekennzeichnet, dass** zusätzlich die Prozessobjekte, die eine eingeschränkte Bedienbarkeit hervorgerufen haben, gespeichert werden, und/oder Statistiken über die Prozessobjekte, Prozessabbilder und Server, die eine eingeschränkte Bedienbarkeit hervorgerufen haben, erstellt werden.

8. Bedien- und Beobachtungssystem für ein Prozessleitsystem, welches einen Prozess in einer technischen Anlage steuert, mit mindestens einem Client (OS_C) und mindestens zwei Servern (OS_S1, OS_S2,...), welche über mindestens ein Kommunikationsmittel (TB) miteinander verbunden sind, wobei jeder OS Server ein Prozessabbild aufweist, welches mit dem Prozess verbundene Prozessobjekte (POi) enthält,
- zur Prozessbeobachtung eine grafische Benutzeroberfläche (UI) auf dem Operator Station Client (OS_C) zur Anzeige von Anlagenbildern mit zu den Prozessobjekten gehörigen (Block)-Symbolen vorgesehen ist
**dadurch gekennzeichnet,**
- **dass** eine erste Komponente (D) des ersten Operator Station Servers (OS_S1) dazu ausgebildet ist, zu ermitteln, ob ein weiterer Operator Station Server (OS_S2) des Prozessleitsystems (PL) ausgefallen ist,
- **dass** eine Alarm-Management-Komponente (AM) des ersten Operator Station Servers (OS_S1) mit der ersten Komponente verbunden und dazu ausgebildet ist, nach der Information über den Ausfall dieses Servers (OS_S2) zu überprüfen, ob auf dem ersten Operator Station Server (OS_S1) Anlagenbilder abgelegt sind, die Prozessobjekte aus dem Prozessabbild des ausgefallenen Servers (OS_S2) enthalten und welche Anlagenbilder somit vom Server-Ausfall betroffen sind,
und in diesem Fall einen konfigurierbaren Bedienalarm (P), der über die eingeschränkte Bedienung des betroffenen Anlagenbilds informiert, auszulösen,
- **dass** eine weitere Komponente (DAS), welche einen Alarmstatus von Anlagenbildern verwaltet, mit der Alarm-Management-Komponente verbunden und dazu ausgebildet ist, im Prozessabbild (PI) einen Tag des Alarmstatus des betroffenen Anlagenbilds zu aktualisieren, und über einen Visualisierungs-Service zu veranlassen, dass in Verbindung mit dem betroffenen Anlagenbild auf der grafischen Benutzeroberfläche (UI) des Operator Station Clients (OS_C) der Bedienalarm (P) angezeigt wird.

9. Bedien- und Beobachtungssystem nach Anspruch 8,
**dadurch gekennzeichnet, dass** die Operator Station Server (OS_S1) weitere Komponenten enthalten, die dazu ausgebildet sind, die Verfahrensschritte gemäß der Ansprüche 2 bis 7 durchzuführen.

10. Prozessleitsystem zur Steuerung eines Prozesses in einer technischen Anlage, welches ein Bedien- und Beobachtungssystem gemäß Anspruch 8 oder 9 aufweist.

## Claims

1. Method for identifying a limited operator control and monitoring of a technical plant in which a process is controlled by means of a process control system (PL), wherein the process control system has at least two operator station servers (OS_S1, OS_S2) and at least one operator station client (OS_C) and process objects (POi) that are associated with the process are distributed on process images (PI) of different operator station servers (OS_S1, OS_S2) of the process control system (PL), and for process monitoring a graphical user interface (UI) is provided on the operator station client (OS_C) for displaying plant images with symbols that are associated with the process objects (POi), **characterised in that**
- it is determined by means of a component (D) of a first operator station server (OS_S1) whether a different operator station server (OS_S2) of the process control system (PL) has failed,
- a failure of this server (OS_S2) is reported to an alarm management component (AM) of at least the first of the operator station servers (OS_S1),
- the alarm management component (AM) checks whether plant images that include process objects from the process image of the failed server (OS_S2) are stored on the first operator station server (OS_S1) and which plant images are affected by the server failure,
- in this case, an operator alarm (P) is trigged which informs the operator that operator control of the affected plant image is limited,
- by means of a component (DAS) which manages an alarm status of plant images, a tag which characterises an alarm status of the affected plant image is updated in the process image (PI) of the first operator station server (OS_S1), and
- in conjunction with the affected plant image the operator alarm (P) is displayed on the graphical user interface (UI) of the operator station client (OS_C).

2. Method according to claim 1,
**characterised in that**, so as to display the operator alarm (P) on the graphical user interface of the client, the updated tag is reported in the case of the visualisation service (VS) by way of a tag interface (tag-DS), and the operator alarm (P) is taken into consideration by means of the component display hierarchy (DH_DL) in all displays as an alarm of its own class.

3. Method according to claim 1 or 2,
**characterised in that** the operator alarm can be configured.

4. Method according to claim 1 or 2,
**characterised in that** the operator alarm is displayed in a separate display or the display of the operator alarm is provided together with process alarms in group alarm displays or message sequence displays.

5. Method according to one of the preceding claims,
**characterised in that** the tag of the alarm status of the affected plant image is updated in the process image at run time of the control system in real time or with each cycle or in an event-controlled manner.

6. Method according to one of the preceding claims,
**characterised in that** a status of the tag is stored in dependence upon time in order to determine time periods in which operator control is limited.

7. Method according to claim 6,
**characterised in that** in addition the process objects that have brought about a limited operator control are stored, and/or statistics regarding the process objects, process images and server that have brought about a limited operator control are generated.

8. Operator control and monitoring system for a process control system
which controls a process in a technical plant, having at least one client (OS_C) and at least two servers (OS_S1, OS_S2, ...) which are connected to one another by way of at least one communication means (TB), wherein
each OS server has a process image which includes process objects (POi) that are associated with the process,
- for process monitoring a graphical user interface (UI) is provided on the operator station client (OS_C) for displaying plant images with (block) symbols that are associated with the process objects,
**characterised in that**
- a first component (D) of the first operator station server (OS_S1) is designed so as to determine whether a different operator station server (OS_S2) of the process control system (PL) has failed,
- an alarm management component (AM) of the first operator station server (OS_S1) is connected to the first component and is designed so as according to information regarding the failure of this server (OS_S2) to check whether plant images which include process objects from the process image of the failed server (OS_S2) are stored on the first operator station server (OS_S1) and to check which plant images are consequently affected by the server failure,
and in this case, trigger a configurable operator alarm (P) which informs the operator that operator control of the affected plant image is limited,
- a further component (DAS) which manages an alarm status of plant images is connected to the alarm management component and is designed so as to update in the process image (PI) a tag of the alarm status of the affected plant image and to bring about by way of a visualisation service that, in conjunction with the affected plant image, the operator alarm (P) is displayed on the graphical user interface (UI) of the operator station client (OS_C).

9. Operator control and monitoring system according to claim 8,
**characterised in that** the operator station server (OS_S1) includes further components that are designed so as to perform method steps according to claims 2 to 7.

10. Process control system for controlling a process in a technical plant which has an operator control and monitoring system according to claim 8 or 9.

## Revendications

1. Procédé de détection d'une commande restreinte et d'observation d'une installation technique, dans lequel on commande un processus au moyen d'un système (PL) de conduite de processus, dans lequel le système de conduite de processus a au moins deux operators station server (OS_S1, OS_S2) et au moins un operator station client (OS_C), et des objets (POi) de processus, reliés au processus, sont répartis sur des représentations (PI) de processus d'operator station server (OS_S1, OS_S2) différents du système (PL) de conduite de processus et, pour l'observation de processus, il est prévu une surface (UI) d'utilisateur graphique sur l'operator station client (OS_C) pour l'indication d'images de l'installation par de symboles appartenant aux objets (POi) de processus,
**caractérisé**
- **en ce que**, au moyen d'un composant (D) d'un premier operator station server (OS_S1), on détermine si un autre operator station server (OS_S2) du système (PL) de conduite de processus est défaillant,
- **en ce qu'**on annonce une défaillance de ce server (OS_S2) à un composant (AM) de gestion d'alerte au moins du premier des operators station server (OS_S1),
- **en ce que** le composant (AM) de gestion d'alerte contrôle s'il est déposé, sur le premier operator station server (OS_S1), des images de l'installation, qui contiennent des objets de processus de la représentation de processeur du server (OS_S2) défaillant et les images de l'installation, qui sont concernées par la défaillance du server,
- **en ce que**, dans ce cas, on déclenche une alerte (P) de commande, qui donne de l'information sur la commande restreinte de l'image concernée de l'installation,
- **en ce que**, au moyen d'un composant (DAS), qui gère un statut d'alerte d'image de l'installation, dans la représentation (PI) de processus du premier operator station server (OS_S1), on met à jour un jour, qui caractérise un statut d'alerte de l'image concernée de l'installation, et
- **en ce que**, en liaison avec l'image concernée de l'installation, on indique l'alerte (P) de commande sur la surface (UI) d'utilisateur graphique de l'operation station client (OS_C).

2. Procédé suivant la revendication 1,
**caractérisé en ce que**, pour indiquer l'alerte (P) de commande sur la surface d'utilisateur graphique du client, on annonce le jour mis à jour auprès d'un service (VS) de visualisation par l'intermédiaire d'une interface (Tag_DS) de jour, et on prend en compte, comme alerte de classe propre, au moyen du composant display-hierarchie (DH_DL), l'alerte (P) de commande dans toutes les indications.

3. Procédé suivant la revendication 1 ou 2,
**caractérisé en ce que** l'alerte de commande est configurable.

4. Procédé suivant la revendication 1 ou 2,
**caractérisé en ce que** l'on indique l'alerte de commande dans une indication distincte ou l'indication de l'alerte de commande s'effectue ensemble avec des alertes de processus dans des indications d'alerte en groupe ou dans des indications successives de messages.

5. Procédé suivant l'une des revendications précédentes,
**caractérisé en ce que** la mise à jour du jour du statut d'alerte de l'image concernée de l'installation dans la représentation de processus s'effectue pour le temps de marche du système de conduit en temps réel ou avec chaque cadence ou d'une manière commandée par un événement.

6. Procédé suivant l'une des revendications précédentes,
**caractérisé en ce que** l'on met en mémoire un état du jour en fonction du temps, pour déterminer des laps de temps dans lesquels il y a une possibilité de commande restreinte.

7. Procédé suivant la revendication 6,
**caractérisé en ce qu'**on met en mémoire supplémentairement les objets de processus, qui ont provoqué une possibilité de commande restreinte et/ou on établit des statistiques sur les objets de processus, les représentations de processus et les servers, qui ont provoqués une possibilité de commande restreinte.

8. Système de commande et d'observation d'un système de conduite de processus, qui commande un processus dans une installation technique, comprenant au moins un client (OS_C) et au moins deux servers (OS_S1, OS_S2, ...), qui sont reliés les uns aux autres par au moins un moyen (TB) de communication, dans lequel chaque server (OS) a une représentation de processus, qui contient des objets (POi) de processus reliés au processus,
- il est prévu, pour l'observation de processus, une surface (UI) d'utilisateur graphique sur l'operator station client (OS_C), pour l'indication d'images de l'installation par des symboles (Block) appartenant aux objets de processus,
**caractérisé**
- **en ce qu'**un premier composant (D) du premier operator station server (OS_S1) est constitué pour déterminer si un autre operator station server (OS_S2) du système (PL) de conduite de processus est défaillant,
- **en ce qu'**un composant (AM) de gestion d'alerte du premier operator station server (OS_S1) est relié au premier composant et est constitué pour, après l'information sur la défaillance de ce server (OS_S2), contrôler s'il est déposé sur le premier operator station server (OS_S1) des images de l'installation, qui contiennent des objets de processus de la représentation de processus du server (OS_S2) défaillant et lesquelles images de l'installation sont ainsi concernées par la défaillance du server, et dans ce cas, pour déclencher une alerte (P) configurable de commande, qui donne de l'information sur la commande restreinte de l'image concernée de l'installation,
- **en ce qu'**un autre composant (DAS), qui gère un statut d'alerte d'image de l'installation est relié au composant de gestion d'alerte et est constitué pour mettre à jour, dans la représentation (PI) de processus, un jour du statut d'alerte de l'image concernée de l'installation et pour provoquer, par un service de visualisation que, en liaison avec l'image concernée de l'installation, l'alerte (P) de commande soit indiquée sur la surface (UI) d'utilisateur graphique de l'operator station client (OS_C).

9. Système de commande et d'observation suivant la revendication 8,
**caractérisé en ce que** l'operator station server (OS_S1) contient d'autres composants, qui sont constitués pour effectuer les stades du procédé suivant les revendications 2 à 7.

10. Système de conduite de processus pour la commande d'un processus dans une installation technique, qui a un système de commande et d'observation suivant la revendication 8 ou 9.
